# EUROPÄISCHE PATENTANMELDUNG

(11) **EP 2 883 893 A1**
(43) Veröffentlichungstag der Anmeldung: **17.06.2015**
(21) Anmeldenummer: 13196346.4
(22) Anmeldetag: 10.12.2013
(51) Int. Cl.: C08G 2/00, C08L 59/00

(54) **Verfahren zur Herstellung von Formaldehyd-Alkylencarbonat-Copolymeren**

(71) Anmelder: Bayer MaterialScience AG, 51373 Leverkusen (DE)
(72) Erfinder: Wolf, Aurel, 42489 Wülfrath (DE); Peckermann, Ilja, 50735 Köln (DE); Langanke, Jens, 53894 Kommern (DE)
(74) Vertreter: BIP Patents

(57) **Zusammenfassung**

Die vorliegende Erfindung betrifft ein Verfahren zur Herstellung von Formaldehyd-Alkylencarbonat-Copolymeren, umfassend den Schritt der Reaktion von trimerem, oligomerem und/oder polymerem Formaldehyd mit einem Alkylencarbonat in Gegenwart eines Katalysators, wobei die Reaktion unter Beaufschlagung von CO₂ durchgeführt wird. Sie betrifft weiterhin nach diesem Verfahren erhältliche Copolymere sowie deren Umsetzungsprodukte mit Polyisocyanaten.

## Beschreibung

Die vorliegende Erfindung betrifft ein Verfahren zur Herstellung von Formaldehyd-Alkylencarbonat-Copolymer, umfassend den Schritt der Reaktion von trimerem, oligomerem und/oder polymerem Formaldehyd mit einem Alkylencarbonat in Gegenwart eines Katalysators. Sie betrifft weiterhin nach diesem Verfahren erhältliche Copolymere sowie deren Umsetzungsprodukte mit Polyisocyanaten.

Formaldehyd-Alkylencarbonat-Copolymere sind insbesondere deshalb von Interesse, weil durch den Einbau von Kohlendioxid-Einheiten in die Polymerkette frei verfügbare und ansonsten klimaschädliche Ausgangsmaterialien eingesetzt werden können. Das Ziel der Entwicklungen auf diesem Gebiet ist es, einen wirtschaftlichen Herstellungsprozess zu entwickeln, bei dem ein möglichst hoher Kohlendioxid-Gehalt in dem Polymer erzielt wird.

US 3,012,990 offenbart eine Copolymerisation von zyklischem Ethylencarbonat (CO₂-Quelle) mit 1,3,5-Trioxan (Formaldehyd-Quelle) in Gegenwart von Bortrifluorid-Katalysatoren.

Militskova et al. (Plasticheskie Massy, 1973, 3, 9, Polymerization and copolymerization of formaldehyde in the presence of alkylene carbonates) beschreiben die BF₃-Etherat-katalysierte Copolymerisation von Trioxan in zyklischem Propylencarbonat. Allerdings entwicht bei erhöhten Temperaturen (80 °C bis 90 °C) und erhöhten Katalysatorkonzentrationen das CO₂ aus dem Propylencarbonat, so dass das Copolymerprodukt kein Carbonat mehr enthält. Dieses wird durch das Fehlen entsprechender Signale im IR-Spektrum belegt.

DE 2055045 A1 betrifft ein Verfahren zur Herstellung hochmolekularer Copolymerisate von Trioxan mit Ethylenoxidderivaten. Charakteristisch in dem hierin beschriebenen Verfahren ist, dass die Copolymerisation in Gegenwart von Alkylencarbonaten, insbesondere Ethylencarbonat oder Propylencarbonat, durchgeführt wird.

Die vorliegende Erfindung hat sich die Aufgabe gestellt, ein verbessertes Verfahren zur Herstellung von Formaldehyd-Alkylencarbonat-Copolymeren bereitzustellen, bei dem ein hoher Anteil an CO₂ in das Copolymer eingebaut wird.

Erfindungsgemäß gelöst wird diese Aufgabe durch ein Verfahren zur Herstellung von Formaldehyd-Alkylencarbonat-Copolymeren, umfassend den Schritt der Reaktion von trimerem, oligomerem und/oder polymerem Formaldehyd mit einem Alkylencarbonat in Gegenwart eines Katalysators, wobei die Reaktion unter Beaufschlagung von CO₂ durchgeführt wird.

Es wurde überraschenderweise festgestellt, dass sich durch das erfindungsgemäße Verfahren Copolymere erhalten lassen, deren Reflexion im IR-Spektrum in einem für Carbonylbanden charakteristischen Bereich (1735 cm⁻¹ ± 5 cm⁻¹) verringert ist. Dieses lässt auf einen hohen Anteil an eingebautem CO₂ schließen.

Das Beaufschlagen mit CO₂, worunter im erfindungsgemäßen Verfahren ein CO₂-Partialdruck von > 1 bar verstanden wird, kann kontinuierlich oder diskontinuierlich erfolgen. So lässt sich beispielsweise ein Autoklavreaktor nach Erreichen des vorgesehenen Druckes bei geöffneter oder geschlossener CO₂-Flasche oder aber bei geregelter CO₂-Zugabe mittels eines Massenflussreglers betreiben.

Als Formaldehydquelle kann trimeres, oligomeres und/oder polymeres Formaldehyd eingesetzt werden. In Gegenwart des Katalysators findet die Reaktion mit dem Alkylencarbonat statt. Es ist bevorzugt, dass das Alkylencarbonat ein zyklisches Alkylencarbonat ist. Alkylencarbonate lassen sich formal aus der Reaktion von Alkylenoxiden mit CO₂ ableiten. Beispiele hierfür sind Ethylencarbonat und Propylencarbonat.

Die molaren Verhältnisse des eingesetzten Formaldehyds zum Alkylencarbonat liegen vorzugsweise in einem Bereich von 1:10 bis 10:1, mehr bevorzugt 1:6 bis 6:1 und besonders bevorzugt 1:4 bis 4:1.

Die Menge des Katalysators, bezogen auf das Alkylencarbonat, beträgt vorzugsweise 0.01 mol-% bis 10 mol-%, mehr bevorzugt 0.05 mol-% bis 5 mol-% und besonders bevorzugt 0.1 mol-% bis 2 mol-%.

Die vorliegende Erfindung wird nachfolgend im Zusammenhang mit weiteren Aspekten und Ausführungsformen beschrieben. Sie können beliebig miteinander kombiniert werden, sofern sich aus dem Kontext nicht eindeutig das Gegenteil ergibt.

In einer Ausführungsform des erfindungsgemäßen Verfahrens beträgt der CO₂-Partialdruck ≥ 15 bar, vorzugsweise > 20 bar und mehr bevorzugt > 25 bar. Es ist möglich, dass der CO₂-Partialdruck ≥ 15 bar bis ≤ 100 bar beträgt. Günstigerweise beträgt dieser Partialdruck > 20 bar bis < 85 bar und mehr bevorzugt > 20 bar bis < 75 bar. Vorzugsweise entspricht der CO₂-Partialdruck dem Gesamtdruck in der Gasphase des Reaktionsraumes oder der Anteil des CO₂-Partialdrucks am Gesamtdruck beträgt 90% oder mehr. Dieses kann dann der Fall sein, wenn leicht siedende oder Gase abspaltende Reaktionskomponenten eingesetzt werden. Es ist ferner möglich, mittels eines Gasgemisches in der Gasphase des Reaktionsraumes einen höheren Gesamtdruck einzustellen, solange die erfindungsgemäße Untergrenze für den CO₂-Partialdruck nicht unterschritten wird.

In einer weiteren Ausführungsform des erfindungsgemäßen Verfahrens umfasst der Katalysator ein Metall M in einer Oxidationsstufe von ≥ III, wobei M ausgewählt ist aus der Gruppe B, Sc, Y, Ti, Zr, Hf und/oder ein Lanthanoid; und/oder der Katalysator umfasst Zinn einer Oxidationsstufe von ≥ II. "Lanthanoide" im Sinne der vorliegenden Erfindung sind die Metalle Lanthan, Cer, Praseodym, Neodym, Promethium, Samarium, Europium, Gadolinium, Terbium, Dysprosium, Holmium, Erbium, Thulium, Ytterbium und Lutetium.

In einer weiteren Ausführungsform des erfindungsgemäßen Verfahrens wird 1,3,5-Trioxan eingesetzt.

In einer weiteren Ausführungsform des erfindungsgemäßen Verfahrens entspricht das Alkylencarbonat der nachfolgenden Formel: 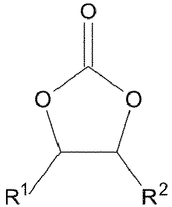 wobei R¹ und R² unabhängig voneinander ausgewählt sind aus der Gruppe Wasserstoff, lineares C₁- bis C₁₆-Alkyl, C₃- bis C₁₆-Cycloalkyl, C₂- bis C₁₆-Alkenyl und/oder Aryl.

Der Ausdruck "Alkyl" umfasst im Sinne dieser Erfindung acyclische gesättigte oder ungesättigte aliphatische Kohlenwasserstoffreste, die jeweils verzweigt oder unverzweigt sowie unsubstituiert oder ein- oder mehrfach substituiert sein können. Bevorzugt ist "Alkyl" aus der Gruppe ausgewählt, die Methyl, Ethyl, n-Propyl, 2-Propyl, n-Butyl, iso-Butyl, sec.-Butyl, tert.-Butyl, n-Pentyl, isoPentyl, neo-Pentyl, n-Hexyl, n-Heptyl, n-Octyl, n-Nonyl, n-Decyl umfasst.

Der Ausdruck "Cycloalkyl" bedeutet für die Zwecke dieser Erfindung cyclische aliphatische (cycloaliphatische) Kohlenwasserstoffe, wobei die Kohlenwasserstoffe gesättigt oder ungesättigt (aber nicht aromatisch), unsubstituiert oder ein- oder mehrfach substituiert sein können. Die Bindung des Cycloalkyls an die jeweilige übergeordnete allgemeine Struktur kann über jedes beliebige und mögliche Ringglied des Cycloalkyl-Restes erfolgen. Die Cycloalkyl-Reste können auch mit weiteren gesättigten, (partiell) ungesättigten, (hetero)cyclischen, aromatischen oder heteroaromatischen Ringsystemen , d.h. mit Cycloalkyl, Heterocyclyl, Aryl oder Heteroaryl kondensiert sein, die wiederum unsubstituiert oder einfach oder mehrfach substituiert sein können. Die Cycloalkyl-Reste können weiterhin einfach oder mehrfach verbrückt sein wie beispielsweise. im Fall von Adamantyl, Bicyclo[2.2.1]heptyl oder Bicyclo[2.2.2]octyl. Bevorzugt ist Cycloalkyl aus der Gruppe ausgewählt, die Cyclopropyl, Cyclobutyl, Cyclopentyl, Cyclohexyl, Cycloheptyl, Cyclooctyl, Cyclononyl, Cyclodecyl, Adamantyl,

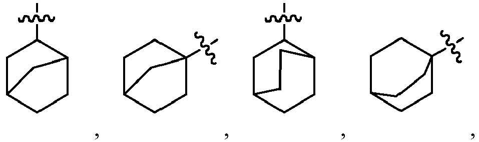

Cyclopentenyl, Cyclohexenyl, Cycloheptenyl und Cyclooctenyl umfasst.

Vorzugsweise sind Alkenylsubstituenten aus der Gruppe ausgewählt, die Ethenyl (Vinyl), Ethinyl, Propenyl (-CH₂CH=CH₂, -CH=CH-CH₃, -C(=CH₂)-CH₃) umfasst.

Der Begriff "Aryl" bedeutet im Sinne dieser Erfindung aromatische Kohlenwasserstoffe, unter anderem Phenyle und Naphthyle. Jeder Aryl-Rest kann unsubstituiert oder einfach oder mehrfach substituiert vorliegen, wobei die Aryl-Substituenten gleich oder verschieden und in jeder beliebigen und möglichen Position des Aryls sein können. Die Bindung des Aryls an die übergeordnete allgemeine Struktur kann über jedes beliebige und mögliche Ringglied des Aryl-Restes erfolgen. Die Aryl-Reste können auch mit weiteren gesättigten, (partiell) ungesättigten, (hetero)cyclischen, aromatischen oder heteroaromatischen Ringsystemen kondensiert sein, d.h. mit Cycloalkyl, Heterocyclyl, Aryl oder Heteroaryl, die wiederum unsubstituiert oder einfach oder mehrfach substituiert sein können. Beispiele für kondensierte Aryl-Reste sind Benzodioxolanyl und Benzodioxanyl. Bevorzugt ist Aryl aus der Gruppe ausgewählt, die Phenyl, 1-Naphthyl und 2-Naphthyl enthält, welche jeweils unsubstituiert oder ein- oder mehrfach substituiert sein können. Ein besonders bevorzugtes Aryl ist Phenyl, unsubstituiert oder einfach oder mehrfach substituiert.

Hierbei ist es bevorzugt, dass als Alkylencarbonat Ethylencarbonat, Propylencarbonat und/oder Butylencarbonat eingesetzt wird.

In einer weiteren Ausführungsform des erfindungsgemäßen Verfahrens ist der Katalysator ausgewählt aus der Gruppe BF₃·OEt₂, TiCl₄, ZrCl₄, YbCl₃ und/oder SnCl₂.

In einer weiteren Ausführungsform des erfindungsgemäßen Verfahrens wird die Reaktion bei einer Temperatur von ≥ 80 °C bis ≤ 150 °C durchgeführt. Vorzugsweise beträgt die Temperatur > 90 °C bis ≤ 145 °C, mehr bevorzugt ≥ 100 °C bis ≤ 140 °C.

In einer weiteren Ausführungsform des erfindungsgemäßen Verfahrens umfasst dieses weiterhin den Schritt der Reaktion des erhaltenen Copolymers mit einer gegenüber OH-Gruppen reaktiven Verbindung. Auf diese Weise können Polymere mit erhaltenen Endgruppen zum Beispiel stabilisiert werden. Dieses wird auch als "End-Capping" bezeichnet. Weiterhin ermöglicht dieses Vorgehen den Einbau von Verzweigungsstellen und eine weitere Kettenverlängerung des Polymers.

In einer weiteren Ausführungsform des erfindungsgemäßen Verfahrens ist die gegenüber OH-Gruppen reaktive Verbindung ausgewählt aus der Gruppe der Anhydride und/oder der Alkylenoxide. Beispiele für geeignete Anhydride sind Essigsäureanhydrid, Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenyl-bernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Bei den Alkylenoxiden handelt es sich bevorzugt um Alkylenoxide mit 2 - 4 Kohlenstoffatomen. Dabei kann es sich beispielsweise um eine oder mehrere Verbindungen ausgewählt aus der Gruppe Styroloxid, Ethylenoxid, Propylenoxid, 2,3-Butenoxid und/oder 2-Methyl-1,2-propenoxid (Isobutenoxid) handeln. Es ist weiterhin möglich, dass Alkylenoxide mit mehr als einer Epoxygruppe eingesetzt werden können.

In einer weiteren Ausführungsform des erfindungsgemäßen Verfahrens ist die gegenüber OH-Gruppen reaktive Verbindung ausgewählt aus der Gruppe der Polyisocyanate. Als Polyisocyanat eignen sich erfindungsgemäß beispielsweise 1,4-Butylendiisocyanat, 1,6 Hexamethylendiisocyanat (HDI), Isophorondiisocyanat (IPDI), 2,2,4 und/oder 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendiisocyanat, 4-Isocyanatomethyl-1,8-octandiisocyanat (Nonantriisocyanat), 1,4-Phenylendiisocyanat, 2,4- und/oder 2,6-Toluylendiisocyanat, 1,5-Naphthylendiisocyanat, 2,2'- und/oder 2,4'- und/oder 4,4'-Diphenylmethandiisocyanat, 1,3-und/oder 1,4-Bis-(2-isocyanato-prop-2-yl)-benzol (TMXDI), 1,3-Bis(isocyanatomethyl)benzol (XDI), Alkyl-2,6-diisocyanatohexanoate (Lysindiisocyanate) mit Alkylgruppen mit 1 bis 8 Kohlenstoffatomen sowie Mischungen davon. Weiterhin sind Uretdion-, Isocyanurat-, Biuret-, Iminooxadiazindion- oder Oxadiazintrionstruktur enthaltende Verbindungen basierend auf den genannten Diisocyanaten geeignete Bausteine.

Geeignete Isocyanat-Komponenten sind vor allem die technisch leicht zugänglichen Polyisocyanate, zum Beispiel das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

In einer weiteren Ausführungsform des erfindungsgemäßen Verfahrens wird der Katalysator erst bei Erreichen einer vorbestimmten Temperatur hinzugegeben. Der Vorteil an dieser Vorgehensweise ist, dass eine unerwünschte Lewis-saure Polymerisation des Formaldehyds zu Polyoxymethylen (POM) verhindert werden kann. Vorzugsweise wird der Katalysator kurz vor oder bei Erreichen der vorbestimmten Reaktionstemperatur hinzugegeben. So kann dieses bei ≤ 90%, ≤ 80% oder ≤ 70% der vorbestimmten Reaktionstemperatur geschehen. Beispielsweise kann die Katalysatorzugabe bei Erreichen von 140 °C, im Fall von BF₃ von 120 °C, erfolgen.

Ein weiterer Aspekt der vorliegenden Erfindung ist ein Formaldehyd-Alkylencarbonat-Copolymer, welches durch ein erfindungsgemäßes Verfahren erhältlich ist und eine Reflexion im Infrarot-Spektrum bei 1735 cm⁻¹ ± 5 cm⁻¹ von ≤ 86% aufweist. Vorzugsweise beträgt diese Reflexion ≤ 80% und mehr bevorzugt < 75%.

In einer Ausführungsform des erfindungsgemäßen Copolymers weist dieses einen CO₂-Gehalt von ≥ 3.0 Gewichts-% bis ≤ 33 Gewichts-% auf. Besonders bevorzugt liegt der CO₂-Gehalt der erfindungsgemäßen Copolymeren zwischen > 3.5 Gewichts-% und < 25 Gewichts-%.

Schließlich betrifft die vorliegende Erfindung auch ein Polyurethan-Polymer, welches durch das oben genannte erfindungsgemäße Verfahren erhältlich ist.

Die Erfindung wird anhand der nachfolgenden Beispiele weiter erläutert, ohne jedoch darauf beschränkt zu sein.

### Beispiele

Die folgenden Beispiele beschreiben die Herstellung von Polymeren aus cyclischem Propylencarbonat und 1,3,5-Trioxan. Die gebildete Polymere wurde mittels IR-Spektroskopie (Nicolet Magna FT-IR 550 Spektrometer, Aufnahmesoftware: OMNIC Version 7.3, Methode nach Herstellerangaben) auf CO₂-Einbau analysiert, wobei das Signal der linearen Carbonat-Gruppe bei ∼1735 cm⁻¹ (Reflexion) als Maß für den Einbau herangezogen wurde.

Die Quantifizierung des CO₂-Einbaus erfolgte über eine Referenzmessung mit einem Polyethercarbonatpolyol, dessen CO₂-Gehalt bekannt war. Dieses Referenzpolyol wies laut NMR-Spektroskopie einen CO₂-Gehalt von 12 Gewichts-% auf. Details sind unter anderem in WO 2012/049162 A1 angegeben, auf die vollumfänglich Bezug genommen wird.

### Beispiel 1: Katalysator BF₃·OEt₂ bei 37 bar CO₂

In einen 300 mL Druckreaktor mit Gasdosierungseinrichtung wurden in einem 1:1 Verhältnis 35,0 g (0,39 mol) 1,3,5-Trioxan (handelsüblich, Acros) und 39,7 g (0,39 mol) cyclischem Propylencarbonat (handelsüblich, Merck), welches zuvor über 14 Å Molsieb gelagert wurde, vorgelegt und der Reaktor verschlossen. Anschließend wurde die Rührerdrehzahl auf 500 Upm eingestellt und der Reaktor durch nachfolgendes 3-faches Evakuieren und Beaufschlagung mit N₂ (ca. 3 bar) inertisiert. Bei 120 °C und 36 bar CO₂ wurde durch Zugabe von 1.3 mmol BF₃·OEt₂ als Katalysator zur Reaktionsmischung die Polymerisation gestartet. Anschließend wurden eine T von 140 °C und ein Druck von 36 bar CO₂ eingestellt. Nach der entsprechenden Reaktionszeit von 60 min wurde der Reaktor auf Raumtemperatur abgekühlt.

Der erhalte farblose Feststoff wurde drei Mal mit Wasser und einmal Diethylether gewaschen, und unter vermindertem Druck (50 mbar) bei 23 °C getrocknet.

Es ergab sich die in Tabelle 1 dargestellte Reflexion und CO₂-Einbau im Polymer.

### Beispiel 2: Katalysator TiCl₄ bei 48 bar CO₂

Es wurde ein Versuch gemäß des Beispiels 1 durchgeführt, wobei 70,0 g (0,78 mol) 1,3,5-Trioxan und 76,4 g (0,75 mol) cyclischem Propylencarbonat und als Katalysator 1.3 mmol (eq. ∼ 0.1 mol-%) TiCl₄ eingesetzt wurde. Die Zugabe erfolgte bei 140 °C und es wurde ein Druck von 48 bar CO₂ eingestellt. Es ergab sich die in Tabelle 1 dargestellte Reflexion und CO₂-Einbau im Polymer.

### Beispiel 3: Katalysator TiCl₄ bei 11 bar CO₂

Es wurde ein Versuch gemäß des Beispiels 2 durchgeführt, wobei als Katalysator TiCl₄ eingesetzt bzw. ein Druck von 11 bar CO₂ eingestellt wurde. Es ergab sich die in Tabelle 1 dargestellte Reflexion und CO₂-Einbau im Polymer.

### Beispiel 4: Katalysator ZrCl₄ bei 40 bar CO₂

Es wurde ein Versuch gemäß des Beispiels 2 durchgeführt, wobei in Abweichung davon die Temperatur bei der Zugabe 125 °C betrug. Als Katalysator ZrCl₄ wurde eingesetzt und es wurde ein Druck von 40 bar CO₂ eingestellt. Es ergab sich die in Tabelle 1 dargestellte Reflexion und CO₂-Einbau im Polymer.

### Beispiel 5: Katalysator YbCl₃ bei 35 bar CO₂

Es wurde ein Versuch gemäß des Beispiels 2 durchgeführt, wobei als Katalysator YbCl₃ eingesetzt bzw. ein Druck von 35 bar CO₂ eingestellt wurde. Die Zugabe erfolgte bei 140 °C. Es ergab sich die in Tabelle 1 dargestellt Reflexion und CO₂-Einbau im Polymer.

### Beispiel 6 (Vergleichsbeispiel): Katalysator TiCl₄ bei 41 bar N₂

Es wurde ein Versuch gemäß des Beispiels 1 durchgeführt, wobei als Katalysator TiCl₄ eingesetzt wurde bzw. ein Druck von 41 bar N₂ eingestellt wurde. Die Zugabe erfolgte bei 140 °C. Es ergab sich die in Tabelle 1 dargestellte Reflexion und CO₂-Einbau im Polymer.

**Tabelle 1:**

| Bsp. Nr. | Kat. | Zeit [min] | Temp. [°C] | Druck [bar] | [Reflexion-%] bei 1735 cm⁻¹ | Ausbeute [%] | CO₂ [Gew.-%] |
|---|---|---|---|---|---|---|---|
| **1** | BF₃·OEt₂ | 60 | 140 | 36 / CO₂ | 77,2 | 23,28 | 5,1 |
| **2** | TiCl₄ | 60 | 140 | 48 / CO₂ | 71,4 | 4,77 | 6,4 |
| **3** | TiCl₄ | 60 | 140 | 11 / CO₂ | 90 | 5,13 | 2,2 |
| **4** | ZrCl₄ | 60 | 140 | 40 / CO₂ | 72,3 | 11,2 | 6,2 |
| **5** | Ybcl₃ | 60 | 140 | 35 / CO₂ | 85,2 | 6,2 | 3,3 |
| **6** | TiCl₄ | 60 | 140 | 41 / N₂ | 93,2 | 22,97 | 1,5 |

### Beispiel 7: Katalysator SnCl₂ bei 1 bar CO₂

In einen 300 mL Druckreaktor mit Gasdosierungseinrichtung wurden in einem 1:1 Verhältnis 35,0 g (0,39 mol) 1,3,5-Trioxan (handelsüblich, Acros) und 39,7 g (0,39 mol) cyclischem Propylencarbonat (handelsüblich, Aldrich), welches zuvor über 14 Å Molsieb gelagert wurde, zusammen mit 2,5 g (0,0132 mol) SnCl₂ vorgelegt und der Reaktor verschlossen. Anschließend wurde die Rührerdrehzahl auf 500 Upm eingestellt und der Reaktor durch nachfolgendes 3-faches Evakuieren und Beaufschlagung mit N₂ (ca. 3 bar) inertisiert. Anschließend wurde durch Evakuieren und Beaufschlagung ein Druck von 1 bar CO₂ eingestellt und der Reaktor auf T = 140 °C erwärmt. Nach der entsprechenden Reaktionszeit von 60 min wurde dieser auf Raumtemperatur abgekühlt. Es wurde ein Anstieg des Innendruckes auf ca. 8 bar beobachtet.

Der erhalten farblose Feststoff wurde drei Mal mit Wasser und einmal Diethylether gewaschen, und unter vermindertem Druck (50 mbar) bei 23 °C getrocknet. Es ergab sich die in Tabelle 2 dargestellt Reflexion und CO₂-Einbau im Polymer.

### Beispiel 8: Katalysator SnCl₂ bei 53 bar CO₂

Es wurde ein Versuch gemäß des Beispiels 7 durchgeführt, wobei ein Druck von 53 bar CO₂ eingestellt wurde. Es ergab sich die in Tabelle 2 dargestellt Reflexion und CO₂-Einbau im Polymer.

### Beispiel 9 (Vergleichsbeispiel): Katalysator SnCl₂ bei 1 bar N₂

Es wurde ein Versuch gemäß des Beispiels 7 durchgeführt, wobei ein Druck von 1 bar N₂ eingestellt wurde. Es wurde ein konstanter Anstieg des Innendruckes auf ca. 10 bar beobachtet. Es ergab sich die in Tabelle 2 dargestellt Reflexion und CO₂-Einbau im Polymer.

### Beispiel 10 (Vergleichsbeispiel): Katalysator SnCl₂ bei 35 bar N₂

Es wurde ein Versuch gemäß des Beispiels 7 durchgeführt, wobei ein Druck von 35 bar N₂ eingestellt wurde. Es ergab sich die in Tabelle 2 dargestellt Reflexion und CO₂-Einbau im Polymer.

### Beispiel 11: Katalysator SnCl₂ bei 35 bar CO₂

Es wurde ein Versuch gemäß des Beispiels 7 durchgeführt, wobei ein Druck von 35 bar CO₂ eingestellt wurde. Es ergab sich die in Tabelle 2 dargestellt Reflexion und CO₂-Einbau im Polymer.

### Beispiel 12: Katalysator SnCl₂ bei 15 bar CO₂

Es wurde ein Versuch gemäß des Beispiels 7 durchgeführt, wobei ein Druck von 15 bar CO₂ eingestellt wurde. Es ergab sich die in Tabelle 2 dargestellt Reflexion und CO₂-Einbau im Polymer.

**Tabelle 2:**

| Bsp. Nr. | Kat. | Zeit [min] | Temp. [°C] | Druck [bar] | [Reflexion-%] bei 1735 cm⁻¹ | Ausbeute [%] | CO₂ [Gew.-%] |
|---|---|---|---|---|---|---|---|
| **7** | SnCl₂ | 60 | 140 | 1 / CO₂ | 85,6 | 12,3 | 3,2 |
| **8** | SnCl₂ | 60 | 140 | 53 / CO₂ | 69,4 | 14,88 | 6,8 |
| **9** | SnCl₂ | 60 | 140 | 1 / N₂ | 90,3 | 7,2 | 2,2 |
| **10** | SnCl₂ | 60 | 140 | 35 / N₂ | 79,2 | 13,47 | 4,6 |
| **11** | SnCl₂ | 60 | 140 | 35 / CO₂ | 76,2 | 15,3 | 5,3 |
| **12** | SnCl₂ | 60 | 140 | 15 / CO₂ | 80,4 (bei 1730 cm⁻¹) | 8,62 | 4,4 |

## Patentansprüche

1. Verfahren zur Herstellung von Formaldehyd-Alkylencarbonat-Copolymeren, umfassend den Schritt der Reaktion von trimerem, oligomerem und/oder polymerem Formaldehyd mit einem Alkylencarbonat in Gegenwart eines Katalysators,
**dadurch gekennzeichnet, dass**
die Reaktion unter Beaufschlagung von CO₂ durchgeführt wird.

2. Verfahren gemäß Anspruch 1, wobei das Beaufschlagen mit CO₂ derart durchgeführt wird, dass der CO₂-Partialdruck ≥ 15 bar beträgt.

3. Verfahren gemäß Anspruch 1 oder 2, wobei:
der Katalysator ein Metall M in einer Oxidationsstufe von ≥ III umfasst, wobei M ausgewählt ist aus der Gruppe B, Sc, Y, Ti, Zr, Hf und/oder ein Lanthanoid;
und/oder
der Katalysator Zinn einer Oxidationsstufe von ≥ II umfasst.

4. Verfahren gemäß einem oder mehreren der vorhergehenden Ansprüche, wobei 1,3,5-Trioxan eingesetzt wird.

5. Verfahren gemäß einem oder mehreren der vorhergehenden Ansprüche, wobei das Alkylencarbonat der nachfolgenden Formel entspricht: 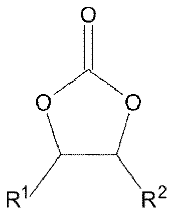 wobei R¹ und R² unabhängig voneinander ausgewählt sind aus der Gruppe Wasserstoff, lineares C₁- bis C₁₆-Alkyl, C₃- bis C₁₆-Cycloalkyl, C₂- bis C₁₆-Alkenyl und/oder Aryl.

6. Verfahren gemäß Anspruch 5, wobei als Alkylencarbonat Ethylencarbonat, Propylencarbonat und/oder Butylencarbonat eingesetzt wird.

7. Verfahren gemäß einem oder mehreren der vorhergehenden Ansprüche, wobei der Katalysator ausgewählt ist aus der Gruppe BF₃·OEt₂, TiCl₄, ZrCl₄, YbCl₃ und/oder SnCl₂.

8. Verfahren gemäß einem oder mehreren der vorhergehenden Ansprüche, wobei die Reaktion bei einer Temperatur von ≥ 80 °C bis ≤ 150 °C durchgeführt wird.

9. Verfahren gemäß einem oder mehreren der vorhergehenden Ansprüche, weiterhin umfassend den Schritt der Reaktion des erhaltenen Copolymers mit einer gegenüber OH-Gruppen reaktiven Verbindung.

10. Verfahren gemäß Anspruch 9, wobei die gegenüber OH-Gruppen reaktive Verbindung ausgewählt ist aus der Gruppe der Anhydride und/oder der Alkylenoxide.

11. Verfahren gemäß Anspruch 9, wobei die gegenüber OH-Gruppen reaktive Verbindung ausgewählt ist aus der Gruppe der Polyisocyanate.

12. Verfahren gemäß einem oder mehreren der vorhergehenden Ansprüche, wobei der Katalysator erst bei Erreichen einer vorbestimmten Temperatur hinzugegeben wird.

13. Formaldehyd-Alkylencarbonat-Copolymer, erhältlich durch ein Verfahren gemäß einem oder mehreren der Ansprüche 1-12, mit einer Reflexion im Infrarot-Spektrum bei 1735 cm⁻¹ ± 5 cm⁻¹ von ≤ 86%.

14. Copolymer gemäß einem oder mehreren der Ansprüche 11-13 mit einem CO₂-Gehalt von ≥ 3.0 Gewichts-% bis ≤ 33 Gewichts-%.

15. Polyurethan-Polymer, erhältlich durch ein Verfahren gemäß Anspruch 11.
